# EUROPÄISCHE PATENTSCHRIFT

(11) **EP 1 881 738 B1**
(45) Veröffentlichungstag und Bekanntmachung des Hinweises auf die Patenterteilung: **25.03.2009**
(21) Anmeldenummer: 07119563.0
(22) Anmeldetag: 14.06.2002
(51) Int. Cl.: H04R 25/00, H04R 3/00, G01S 3/14

(54) **Verfahren zum Betrieb eines Hörgerätes und Anordnung mit einem Hörgerät**
Method of operating a hearing aid and assembly with a hearing aid
Procédé d'utilisation d'une prothèse auditive et assemblage avec une prothèse auditive

(43) Veröffentlichungstag der Anmeldung: 23.01.2008
(62) Teilanmeldung aus: 02013149.6
(73) Patentinhaber: Phonak AG, 8712 Stäfa (CH)
(72) Erfinder: Mory-Drtina, Peter, 9880 St. Cruz da Graciosa (PT)
(74) Vertreter: Troesch Scheidegger Werner AG

(56) Entgegenhaltungen:
- DE-A1- 4 307 490
- GB-A- 1 516 740
- US-A- 5 905 464

## Beschreibung

Die vorliegende Erfindung betrifft ein Verfahren zum Betrieb eines Hörgerätes, ein Hörgerät sowie eine Anordnung mit einem Hörgerät.

Hörgeräte werden in erster Linie zur Kompensation von Hörschäden eingesetzt, damit ein normales Hörvermögen einer Person wieder hergestellt ist.

Aus der DE 100 48 341 C1 ist ein Betriebsverfahren für ein Hörgerät sowie eine Anordnung mit einem Hörgerät bekannt, bei denen zur Vermeidung von Fehlinterpretationen von momentanen Hörsituationen eine Reihe von stationären Sendeeinheiten vorgesehen sind, welche im Bereich von akustischen Signalquellen positioniert sind und welche dauernd oder periodisch ein Signalquellen-spezifisches Signal aussenden. Eine im Hörgerät vorhandene Empfangseinheit kennt die von den Signalquellen ausgesendeten Informationen, und es wählt aufgrund der empfangenen Informationen ein bestgeeignetes Hörprogramm im Hörgerät. Beispielsweise wird zur Erkennung der Hörsituation "Büro" eine Sendeeinheit, welche ein Büro-Erkennungssignal aussendet, beim Arbeitsplatz positioniert. Befindet sich der Hörgeräteträger beim oder in der Nähe seines Arbeitsplatzes, so wird das Büro-Erkennungssignal vom Hörgerät empfangen. Als Folge davon wird im Hörgerät das Hörprogramm "Büro" eingestellt, womit der in einem Büro üblicherweise vorhandenen akustischen Umgebungssituation Rechnung getragen wird.

Die bekannte Lehre ist daher im Wesentlichen ein Hilfsmittel, um die akustische Umgebungssituation zu erkennen. Sie kann daher gegebenenfalls das allgemeine Hörvermögen des Hörgeräteträgers in der entsprechenden Umgebungssituation verbessern. Zur spezifischen Verbesserung des Hörvorgangs, insbesondere zu einer Bezugsperson, eignet sich die bekannte Lehre jedoch nicht.

In der deutschen Offenlegungsschrift DE 199 43 872 A1 ist eine Vorrichtung zur Sprachsteuerung offenbart, wobei mit Hilfe von Richtmikrophonen die interessierenden akustischen Signale zur Steuerung eines Gerätes aufgenommen werden. Die Charakteristik der Richtmikrophone wird mit Hilfe von Infrarot-Bewegungsdetektoren eingestellt, indem die Richtung, aus denen die interessierenden akustischen Signale stammen, mit den Bewegungsdetektoren bestimmt wird, und indem anschliessend die Charakteristik der Mikrophone eingestellt wird. Die bekannte Lehre funktioniert lediglich dann einwandfrei, wenn nur eine einzige, sich bewegende akustische Quelle vorhanden ist. Bei mehreren akustischen Quellen versagt diese Lösung. Im Übrigen erfordert die bekannte Lehre zwei unabhängige Systeme, nämlich eines für die Ortung und eines für die akustische Signalaufnahme, was in einer kostenintensiven Realisierung resultiert.

Die europäische Patentschrift mit der Veröffentlichungsnummer EP-0 472 356 B1 beschreibt ein Spracherkennungsgerät, welches in einem Fahrzeug zum Einsatz kommt und dabei normalerweise manuell ausgeführte Operationen durch vom akustischen Signal ausgelöste Operationen ersetzt. Das System ist mittels eines Richtungs-abhängigen Mikrophons so ausgeführt, dass es akustische Kommandos des Beifahrers ignoriert, während Befehle des Fahrers entgegengenommen werden. Aufgrund der fixen, im Voraus bekannten Position der Befehle abgebenden Person handelt es sich hierbei um ein vorab konfiguriertes System ohne Änderungsmöglichkeiten.

Ferner ist aus EP-0 942 627 A2 ein Hörgerät mit einem Richtmikrophon-System bekannt, bei dem eine Übertragungsfunktion des Hörgerätes in Abhängigkeit einer bestimmten Richtung geändert werden kann.

Schliesslich wird auf die Druckschriften DE-43 07 490 A1, US-5 905 464 und GB-1 516 740 verwiesen, wobei die erstgenannte Druckschrift eine quadrophonische Anlage, die zweit genannte Druckschrift ein Richtungsermittlungsgerät und die letzt genannte Druckschrift ein Ortungsgerät betrifft.

Es ist daher Aufgabe der vorliegenden Erfindung, ein Verfahren zum Betrieb eines Hörgerätes anzugeben, bei dem die vorliegenden Nachteile nicht auftreten und bei dem mit einzelnen oder mit mehreren Bezugspersonen eine verbesserte Kommunikation möglich ist, auch wenn Hörgeräteträger und/oder Bezugsperson ihre Position ändern.

Diese Aufgabe wird durch die in Anspruch 1 angegebenen Massnahmen gelöst. Vorteilhafte Ausgestaltungen der Erfindung, ein Hörgerät sowie eine Anordnung mit einem Hörgerät sind in weiteren Ansprüchen angegeben.

Die Erfindung weist die folgenden Vorteile auf: Indem Informationen über die Richtung einer Bezugsperson in Bezug auf den Hörgerätträger im Hörgerät verarbeitet werden, ist die Möglichkeit geschaffen, die Kommunikation im Alltag, insbesondere im Wohnbereich, d.h. im besonderen zwischen Hörgerätträger und Bezugsperson, wesentlich zu verbessern. Die Erfindung erlaubt es einer Bezugsperson, jederzeit und aus allen Positionen die Kommunikation mit dem Hörgeräteträger aufzunehmen und zu führen, und die Bezugsperson braucht sich nicht zuerst in eine für ein gerade gewähltes Hörprogramm günstige Stellung in Bezug auf den Hörgerätträger zu bringen, damit ein Gespräch überhaupt aufgenommen werden kann. Vor allem Bezugspersonen im Familienkreis, welche häufig den Anstoss zum Beschaffen eines Hörgerätes gegeben haben, sind bis anhin mit dem Problem der Gesprächsaufnahme konfrontiert worden. Dank der Erfindung wurden hier erhebliche Verbesserungen erhalten.

Die Erfindung wird nachfolgend anhand von Zeichnungen beispielsweise näher erläutert. Dabei zeigen:
- Fig. 1,: in Draufsicht, ein Hörgerätträger und verschiedene Bezugspersonen in schematischer Darstellung,
- Fig. 2 und 3,: wiederum in Draufsicht und in schematischer Darstellung, ein Hörgerätträger und eine Bezugsperson,
- Fig. 4: ein Blockdiagramm einer ersten Ausführungsform eines erfindungsgemässen Hörgerätes und
- Fig. 5: ein Blockdiagramm einer zweiten Ausführungsform des erfindungsgemässen Hörgerätes.

Es wird ausdrücklich darauf hingewiesen, dass unter dem Begriff "Hörgerät" sowohl Hörhilfegeräte, welche zur Korrektur bzw. Kompensation von Hörschäden eingesetzt werden, als auch Geräte zur Kommunikation, wie Funkgeräte, fallen. Auch erstreckt sich die beschriebene Erfindung auf alle möglichen Hörgerättypen, wie HdO-(Hinter-dem-Ohr), im Ohr oder implantierte Geräte.

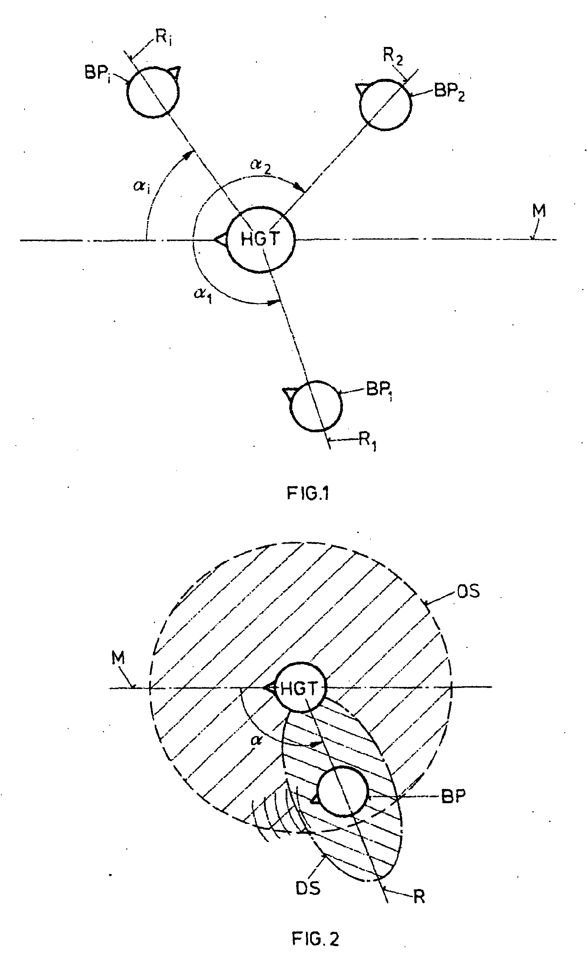

Fig. 1 zeigt in einer Draufsicht einen Hörgerätträger HGT mit einer Medialebene M, welche der Körpersymmetrieebene entspricht, und verschiedene Bezugspersonen BP₁ bis BPᵢ, welche sich in beliebiger Weise um den Hörgerätträger HGT bewegen können. Die Bezugspersonen BP₁ bis BPᵢ befinden sich dabei, vom Hörgerätträger HGT aus gesehen, in momentanen Bezugspersonrichtungen R₁ bis Rᵢ, welche in einem Winkel α₁ bis αᵢ zur Referenzebene, d.h. zur Medialebene M des Hörgerätträgers HGT, stehen. Wie eine Bezugsperson BP₁ bis BPᵢ in Bezug auf den Hörgerätträger HGT ausgerichtet ist, ist zunächst ohne Bedeutung.

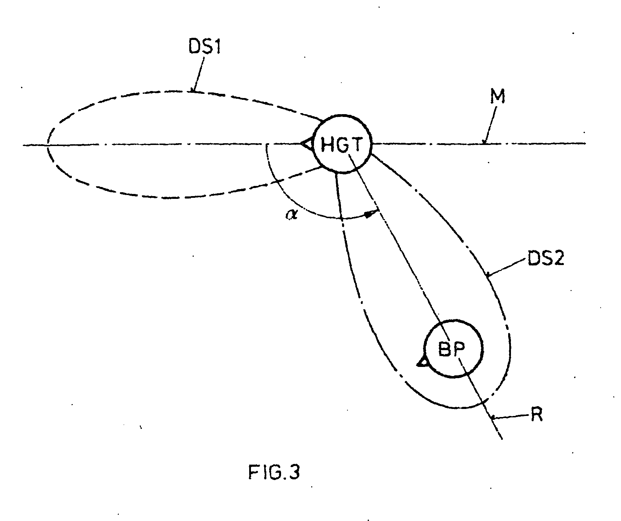

Das erfindungsgemässe Verfahren zeichnet sich nun dadurch aus, dass, um die Kommunikation zwischen dem Hörgerätträger HGT und einer oder mehrerer Bezugspersonen BP₁ bis BPᵢ zu verbessern, und zwar unabhängig von der momentanen Position zueinander, die Bezugspersonrichtungen R₁ bis Rᵢ bestimmt werden und dass eine Übertragungsfunktion im Hörgerät in Abhängigkeit der Bezugspersonrichtung R₁ bis Rᵢ geändert wird. Anhand der Fig. 2 und 3 werden die erfindungsgemässen Verfahrensschritte im Detail erläutert.

In Fig. 2 ist wiederum ein Hörgerätträger HGT dargestellt. Zur Vereinfachung der Erläuterungen und im Unterschied zu Fig. 1 ist in Fig. 2 lediglich eine einzige Bezugsperson BP dargestellt, welche sich, vom Hörgerätträger HGT aus gesehen, in einer Bezugspersonrichtung R befindet. Die Medialebene M des Hörgerätträgers HGT schliesst mit der Bezugspersonrichtung R dabei einen Winkel α ein.

Indem die Bezugspersonrichtung R bestimmt wird, ist die Möglichkeit geschaffen, das akustische Verhalten des Hörgerätes derart zu ändern, dass akustische Signale aus der Bezugspersonrichtung R bevorzugt oder zumindest mit erhöhter Bedeutung verarbeitet werden. Mit anderen Worten wird die Übertragungsfunktion des Hörgerätes durch ändern von die Übertragungsfunktion bestimmenden Parametern in entsprechender Weise angepasst.

Zur Erläuterung der vorstehenden Ausführungen sind in den Fig. 2 und 3 zwei mögliche Situationen dargestellt. In Fig. 2 befindet sich das Hörgerät des Hörgerätträgers HGT in einem so genannten "Omni Signal"-Modus OS. In diesem Modus OS werden alle akustischen Signale, egal aus welcher Richtung sie stammen, gleich behandelt, d.h. alle akustischen Signale werden im Hörgerät gleich gewichtet. In Fig. 2 ist dies durch die Strich-linierte Hörgerätcharakteristik dargestellt. Entsprechend werden alle mit einem Mikrophon aufgenommenen akustischen Signale nach einer allfälligen Verarbeitung im Hörgerät in den Gehörgang des Hörgerätträgers HGT geleitet.

Beginnt nun die Bezugsperson sich akustisch bemerkbar zu machen, indem beispielsweise ein Gespräch mit dem Hörgerätträger HGT aufgenommen wird, so werden wegen des "Omni Signal"-Modus neben den akustischen Signalen der Bezugsperson PB auch Störgeräuschen, welche aus anderen Richtungen stammen als aus der Bezugspersonrichtung R, in den Gehörgang des Hörgerätträgers HGT geleitet. Als Folge davon ist die Sprachverständlichkeit herabgesetzt, was jedoch umgehend verbessert wird, nämlich indem im Hörgerät vom "Omni Signal"-Modus OS in den "Directional Signal"-Modus DS umgeschaltet wird. Der "Directional Signal"-Modus DS zeichnet sich durch eine Empfangs- bzw. Verstärkercharakteristik aus, wie sie in Fig. 2 mit einer Strich-punktierten Linie dargestellt ist. Von entscheidender Bedeutung ist dabei die korrekte Bestimmung der Richtung R, welche als Basis für die Ausrichtung der Hörgerätecharakteristik verwendet wird. Wie die Richtung R der Bezugsperson BP bestimmt werden kann, wird noch erläutert werden. Zunächst wird anhand der in Fig. 3 dargestellten zweiten Situation die Erfindung weiter erläutert. ,

Im Unterschied zu der in Fig. 2 dargestellten Situation befindet sich das Hörgerät gemäss Fig. 3 im "Directional Signal"-Modus DS1 (Strich-linierte Empfangscharakteristik).

Die Symmetrieebene der Empfangscharakteristik liegt dabei in der Medialebene M des Hörgeräteträgers HGT.

Die in Fig. 3 dargestellte Situation ergibt sich zum Beispiel, wenn der Hörgerätträger HGT vor einem Fernsehgerät sitzt und in erster Linie an den akustischen Informationen, welche zusammen mit den Bildinformationen vom Fernsehgerät abgegeben werden, interessiert ist.

Beginnt nun die Bezugsperson sich akustisch bemerkbar zu machen, indem beispielsweise ein Gespräch mit dem Hörgerätträger HGT aufgenommen wird, so werden wegen des "Directional Signal"-Modus DS1 akustische Signale der Bezugsperson PB, welche aus der Richtungen R stammen, vom Hörgerätträger HGT bei Verwendung eines herkömmlichen Hörgerätes kaum wahrgenommen. Als Folge davon ist die Verständlichkeit herabgesetzt, was jedoch erfindungsgemäss umgehend verbessert wird, nämlich indem im Hörgerät entweder vom "Directional Signal"-Modus DS1 in den "Directional Signal"-Modus DS2 umgeschaltet wird oder indem zusätzlich zum "Directional Signal"-Modus DS1 der Modus DS2 zugeschaltet wird. Der "Directional Signal"-Modus DS2 zeichnet sich durch eine Empfangs- bzw. Verstärkercharakteristik aus, wie sie in Fig. 3 mit einer Strich-punktierten Linie dargestellt ist. Von entscheidender Bedeutung ist dabei wiederum die korrekte Bestimmung der Richtung R, welche als Basis für die Ausrichtung der Hörgerätecharakteristik benötigt wird.

Für die Bestimmung der Bezugspersonrichtungen BP₁ bis BPᵢ bzw. BP (Fig. 1 bis 3) werden im folgenden drei Methoden beschrieben, die jede für sich oder in Kombination mit anderen angewendet werden kann. Die Verwendung der ersten Methode allein wird lediglich zur allgemeinen Erläuterung wiedergegeben. Die vorliegende Erfindung bezieht sich auf die Verwendung der zweiten und der dritten Methode.

Die erste Methode besteht darin, dass im Hörgerät Mittel zur Erkennung der Stimme einer Bezugsperson bereitgestellt werden. Ist die Bezugspersonstimme erkannt, kann auch die Richtung, aus der sie stammt, ermittelt werden, und der Parametersatz im Hörgerät kann entsprechend einer gewünschten Richtungscharakteristik, wie sie anhand der Figuren 2 und 3 erläutert worden ist, geändert werden.

Die Technik der Sprechererkennung (speaker recognition) ist allgemein bekannt. Für weiterführende Informationen wird stellvertretend auf den Aufsatz von S. Furui mit dem Titel "An Overview on Speaker Recognition Technology" ("Automatic Speech and Speaker Recognition: Advanced Topics", herausgegeben von C.-H. Lee, F. K. Soong, K. K. Paliwal, 1996, Seiten 31 bis 56) verwiesen.

Bei der Sprechererkennung unterscheidet man einerseits "Speaker Identification", bei dem es um die Identifikation eines Sprechers aus einer Anzahl von bekannten Sprechern geht, und "Speaker Verification", bei dem die Identität eines ermittelten Sprechers überprüft wird. Anderseits unterscheidet man Text-abhängige und Text-unabhängige Methoden. Bei den Text-abhängigen Methoden wird das System auf bestimmte Worte trainiert (Codeworte). Die Erkennung beschränkt sich dann auch auf diese Worte. Die Text-unabhängige Methode funktioniert für beliebige Worte.

Die Sprechererkennung basiert meistens auf der Extraktion von LPC-(Linear Prediction Coefficients)-Verfahren und deren Regressions-Koeffizienten. Die Klassifizierung erfolgt für Text-abhängige Systeme üblicherweise mittels "Dynamic Time Warping" oder "Hidden Markov Models" (HMM), für Text-unabhängige Systeme mittels Vektorquantisierung, "Gaussian Mixture Models", HMMs oder neuronalen Netzwerken. Weiterführende Informationen findet man beispielsweise in der Publikation mit dem Titel "Discrete-Time Processing of Speech Signals" von J. R. Deller, J. H. L. Hansen und J. G. Proakis (IEEE Press, 2000).

Alle vorstehend erwähnten Methoden eignen sich zur Detektion einer Bezugsperson, wobei sowohl die Erkennung der Bezugspersonstimme (Text-unabhängige Verfahren) als auch die Erkennung von Schlüsselworten (Text-abhängige Verfahren) zum Einsatz kommen, um die Richtung der Bezugsperson in Bezug auf den Hörgerätträger ermitteln zu können.

Diese erste Methode zeichnet sich besonders dadurch aus, dass der gesamte Verarbeitungsaufwand im Hörgerät selbst vorgenommen wird. Zusatzgeräte sind, weder beim Hörgerätträger noch bei den Bezugspersonen, nicht notwendig.

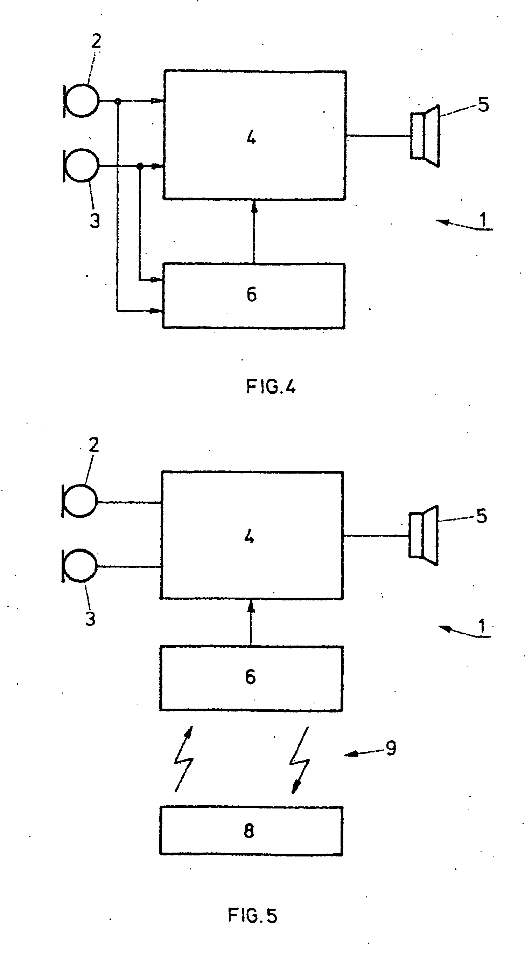

In Fig. 4 ist ein Blockdiagramm eines Hörgerätes 1 dargestellt, das sich insbesondere zur Anwendung der ersten Methode eignet. Mit 2 und 3 sind Mikrophone bezeichnet, mit Hilfe derer akustische Signale in elektrische Signale gewandelt werden, die in der Folge sowohl einer Verarbeitungseinheit 4 als auch einer Richtungsidentifikationseinheit 6 beaufschlagt werden. Die Richtungsidentifikationseinheit 6 ist mit der Signalverarbeitungseinheit 4 wirkverbunden. Das in der Signalverarbeitungseinheit 4 und gegebenenfalls in der Richtungsidentifikationseinheit 6 verarbeitete Signal wird schliesslich einer elektro/akustischen Wandlereinheit 5, auch etwa als Hörer bezeichnet, beaufschlagt.

Bei der zweiten Methode wird eine zusätzliche Sendeeinheit, im Folgenden auch als Benutzereinheit bezeichnet, eingesetzt, die mit einer Empfangseinheit im Hörgerät dauernd oder nach Bedarf kommuniziert. Die Bezugsperson trägt die Benutzereinheit auf sich, womit das Hörgerät bzw. die in diesem integrierte Empfangseinheit die Richtung, in der sich die Bezugsperson befindet, feststellen kann. Mögliche Realisierungsformen sind insbesondere die FM-(Frequency Modulation)-Technik.

Diese zweite Methode zeichnet sich besonders dadurch aus, dass die Benutzereinheit einer anderen Bezugsperson weitergegeben werden kann, ohne dass eine Lernphase zum Trainieren der Erkennungsalgorithmen zu durchlaufen ist, wie dies bei der ersten Methode erforderlich ist.

Eine dritte Methode ist eng an die zweite Methode angelehnt, indem anstelle einer aktiven Benutzereinheit, welche entsprechende Signale aussendet, eine passive Benutzereinheit in Form eines so genannten Transponders zum Einsatz kommt. Ein Transponder zeichnet sich dadurch aus, dass auf ein Stimulationssignal mit bestimmter Frequenz ein Antwortsignal in der Benutzereinheit erzeugt wird. Eine Energieversorgung einer solchen Benutzereinheit ist daher nicht erforderlich, was als wesentlicher Vorteil gegenüber der zweiten Methode zu werten ist.

In Fig. 5 ist ein Blockdiagramm einer erfindungsgemässen Anordnung mit einem Hörgerät 1 dargestellt, das sich insbesondere zur Anwendung der zweiten und der dritten Methode eignet. Das Hörgerät 1 besteht neben den zwei Mikrophonen 2 und 3 wiederum aus der Signalverarbeitungseinheit 4 und der Richtungsidentifikationseinheit 6, allerdings sind im Unterschied zu Fig. 4 nunmehr die Ausgangssignale der Mikrophone 2 und 3 lediglich der Signalverarbeitungseinheit 4 beaufschlagt und nicht auch noch der Richtungsidentifikationseinheit 6. Mit 8 ist eine Benutzereinheit bezeichnet, die in Anwendung der zweiten Methode eine aktive Sendeeinheit und eine Empfangseinheit umfasst. Zwischen der Benutzereinheit 8 und der Richtungsidentifikationseinheit 6 ist eine drahtlose Verbindung 9 vorhanden, die beispielsweise mit FM-(Frequenzmodulation)-Technik realisiert ist. Andere Technologien wie Infrarot sind ebenfalls denkbar.

Bei der Anwendung der dritten Methode ist die Benutzereinheit 8 rein passiv realisiert, wobei beispielsweise die an sich bekannte Transponder-Technologie zur Anwendung kommt.

Neben den drei vorstehend genannten Methoden zur Bestimmung der Bezugspersonrichtung wird ergänzend auf ein bekanntes Verfahren zur Richtungsortung der gleichen Anmelderin verwiesen. Das bekannte Verfahren und eine Ortungsanordnung sind in der Veröffentlichungsschrift der internationalen Anmeldung mit der Veröffentlichungsnummer WO 00/68 703 offenbart. Es hat sich gezeigt, dass sich die Anwendung dieser bekannten Lehre bei der vorliegenden Erfindung vorzüglich eignet.

## Patentansprüche

1. Verfahren zum Betrieb eines Hörgerätes (1) mit einer über einen Parametersatz einstellbaren Übertragungsfunktion, bei dem die Kommunikation zwischen einem eine Referenzebene (M) aufweisenden Hörgerätträger (HGT) und mindestens einer Bezugsperson (BP; BP₁, ..., BPᵢ) auch bei sich ändernden Positionen von Hörgeräteträger (HGT) und/oder Bezugspersonen (BP; BP₁, ..., BPᵢ) gewährleistet ist, wobei das Verfahren darin besteht,
- dass die Übertragungsfunktion des Hörgerätes (1) in Abhängigkeit von mindestens einer momentanen Bezugspersonrichtung (R; R₁, ..., Rᵢ) durch Ändern des Parametersatzes der Übertragungsfunktion eingestellt wird, wobei die Bezugspersonrichtung (R; R₁, ..., Rᵢ) einen Winkel (α; α₁, ..., αᵢ) mit der Referenzebene (M) des Hörgerätträgers (HGT) einschliesst,
**dadurch gekennzeichnet,**
- **dass** die Bezugsperson (BP; BP₁, ..., BPᵢ) eine Benutzereinheit (8) trägt, welche ein vorgegebenes Referenzsignal aussendet, und
- **dass** im Hörgerät (1) eine Richtungsidentifikationseinheit (6) zum Empfangen des vorgegebenen Referenzsignals vorgesehen ist, wobei im Hörgerät (1) aufgrund der Richtungs-sensiblen Informationen der Richtungsidentifikationseinheit (6) die gewünschte Bezugspersonrichtung (R; R₁, ..., Rᵢ) ermittelt wird.

2. Verfahren nach Anspruch 1, **dadurch gekennzeichnet,**
- **dass** im Hörgerät (1) ein vordefiniertes Stimulationssignal zur Stimulation einer in der Benutzereinheit (8) vorhandenen Transpondereinheit erzeugt und ausgesendet wird, und
- **dass** die Transpondereinheit ein Antwortsignal als Referenzsignal aufgrund des Stimulationssignals erzeugt.

3. Verfahren nach einem der Ansprüche 2 oder 3, **dadurch gekennzeichnet, dass** als Referenzebene (M) eine Medialebene des Hörgeräteträgers (HGT) verwendet wird.

4. Hörgerät mit einer über einen Parametersatz einstellbaren Übertragungsfunktion, bei dem die Kommunikation zwischen einem eine Referenzebene (M) aufweisenden Hörgeräteträger (HGT) und mindestens einer Bezugsperson (BP; BP₁, ..., BPᵢ) auch bei sich ändernden Positionen von Hörgeräteträger (HGT) und/oder Bezugsperson (BP; BP₁, ..., BPᵢ) gewährleistet ist, wobei das Hörgerät (1) Mittel zum Einstellen der Übertragungsfunktion des Hörgerätes (1) in Abhängigkeit von mindesten einer der momentanen Bezugspersonenrichtung (R; R₁, ..., Rᵢ) durch Ändern des Parametersatzes der Übertragungsfunktion umfasst, **dadurch gekennzeichnet,**
- **dass** eine Richtungsidentifikationseinheit (6) zum Empfangen eines vorgegebenen Referenzsignals vorgesehen ist, das von einer durch die Bezugsperson (BP; BP₁, ..., BPᵢ) getragenen Benutzereinheit (8) erzeugbar ist, und
- **dass** im Hörgerät (1) aufgrund der Richtungs-sensiblen Informationen der Richtungsidentifikationseinheit (6) die gewünschte Bezugspersonrichtung (R; R₁, ..., Rᵢ) ermittelbar ist.

5. Hörgerät nach Anspruch 4, **dadurch gekennzeichnet,**
- **dass** Mittel zum Erzeugen eines vordefinierten Stimulationssignal zur Stimulation einer in der Benutzereinheit (8) vorhandenen Transpondereinheit vorhanden sind, und
- **dass** ein aufgrund des Stimulationssignals erzeugtes Antwortsignal als Referenzsignal in der Richtungsidentifikationseinheit (6) empfangbar ist.

6. Hörgerät nach einem der Ansprüche 4 oder 5**, dadurch gekennzeichnet, dass** als Referenzebene (M) eine Medialebene des Hörgeräteträgers (HGT) verwendbar ist.

7. Anordnung mit einer Benutzereinheit (8) und einem Hörgerät (1) mit mindestens zwei Mikrophonen (2, 3), einer Signalverarbeitungseinheit (4) und einem Hörer (5), wobei sowohl die Mikrophone (2, 3) als auch der Hörer (5) mit der Signalverarbeitungseinheit (4) verbunden sind, **dadurch gekennzeichnet, dass** im Hörgerät (1) eine Richtungsidentifikationseinheit (6) vorgesehen ist, die mit der Signalverarbeitungseinheit (4) wirkverbunden ist, und dass die Benutzereinheit (8) im Bereich eines Hörgeräteträgers (HGT) angeordnet ist, wobei die Richtungsidentifikationseinheit (6) zur Bestimmung von mindestens einer momentanen Bezugspersonrichtung (R; R1, ..., Ri) mit Hilfe der Benutzereinheit (8) ausgebildet ist.

8. Anordnung nach Anspruch 7, **dadurch gekennzeichnet, dass** die Richtungsidentifikationseinheit (6) mit den Mikrophonen (2, 3) wirkverbunden ist.

9. Anordnung nach Anspruch 7, **dadurch gekennzeichnet, dass** die Richtungsidentifikationseinheit (6) eine Empfangseinheit aufweist und dass die Benutzereinheit (8) eine Sendeeinheit aufweist, wobei die in der Sendeeinheit erzeugten Signale in der Empfangseinheit empfangbar sind.

10. Anordnung nach Anspruch 7, **dadurch gekennzeichnet, dass** die Richtungsidentifikationseinheit (6) sowohl eine Sendeals auch eine Empfangseinheit aufweist.

11. Anordnung nach einem der Ansprüche 7 bis 10, **dadurch gekennzeichnet, dass** die Richtungsidentifikationseinheit (6) im Hörgerät (1) integriert oder mit diesem lösbar gekoppelt ist.

## Claims

1. Method to operate a hearing device (1) having a transfer function adjustable by a set of parameters, the communication between a hearing device user (HGT) having a reference plain (M) and at least one reference person (BP; BP₁, ..., BPᵢ) is also ensured for changing positions of the hearing device user (HGT) and/or the reference persons (BP; BP₁, ..., BPᵢ), the method consists of
- adjusting the transfer function of the hearing device (1) in function of at least one current reference person direction (R; R₁, ..., Rᵢ) by changing the parameter set of the transfer function, the reference person direction (R; R₁, ..., Rᵢ) enclosing an angle (α; α₁, ..., αᵢ) with the reference plain (M) of the hearing device user (HGT),
**characterized in that**
- the reference person (BP; BP₁, ..., BPᵢ) carries a user unit (8), which emits a predefined reference signal, and
- a direction identification unit (6) for receiving the predefined reference signal is provided in the hearing device (1), the desired reference person direction (R; R₁, ..., Rᵢ) being determined in the hearing device (1) based on the direction-sensible information of the direction identification unit (6).

2. Method according to claim 1, **characterized in**
- generating and emitting a predefined stimulation signal in the hearing device (1) for the stimulation of a transponder unit being present in the user unit (8), and
- the transponder unit generating a response signal as reference signal on the basis of the stimulation signal.

3. Method according to one of the claims 2 or 3, **characterized in that** a medial plain of the hearing device user (HGT) is used as reference plain (M).

4. Hearing device having a transfer function adjustable by a set of parameters, the communication between a hearing device user (HGT) having a reference plain (M) and at least one reference person (BP; BP₁, ..., BPᵢ) is also ensured for changing positions of the hearing device user (HGT) and/or the reference person (BP; BP₁, ..., BPᵢ), the hearing device (1) comprising means for adjusting the transfer function of the hearing device (1) in function of at least one current reference person direction (R; R₁, ..., Rᵢ) by changing the set of parameters of the transfer function, **characterized in**
- providing a direction identification unit (6) for receiving a predefined reference signal, which can be generated by a user unit (8) worn by the reference person (BP; BP₁, ..., BPᵢ), and
- detecting the desired reference person direction (R, R1, ..., Rᵢ) in the hearing device (1) based on the directional-sensitive information of the direction identification unit (6).

5. Hearing device according to claim 4, **characterized in**
- means for generating a predefined stimulation signal of a transponder unit being present in the user unit (8), and
- a response signal based on the stimulation signal generated as reference signal being receivable in the direction identification unit (6).

6. Hearing device according to claim 4 or 5, **characterized in that** a medial plain of the hearing device user (HGT) is used as reference plain (M).

7. Arrangement with a user unit (8) and a hearing device (1) with at least two microphones (2, 3), a signal processing unit (4) and a receiver (5), the microphones (2, 3) as well as the receiver (5) are connected to the signal processing unit (4), **characterized in that** a direction identification unit (6) is provided in the hearing device (1) being operationally connected to the signal processing unit (4), and that the user unit (8) is arranged in the area of a hearing device user (HGT), the direction identification unit (6) being formed for the determination of a at least one current reference person direction (R; R₁, ..., Rᵢ) with the aid of the user unit (8).

8. Arrangement according to claim 7, **characterized in that** the direction identification unit (6) is operationally connected to the microphones (2, 3).

9. Arrangement according to claim 7, **characterized in that** the direction identification unit (6) comprises a receiving unit and that the user unit (8) comprises a sending unit, the signals generated in the sending unit are receivable in the receiving unit.

10. Arrangement according to claim 7, **characterized in that** the direction identification unit (6) comprises a sending unit as well as a receiving unit.

11. Arrangement according to one of the claims 7 to 10, **characterized in that** the direction identification unit (6) is integrated in the hearing device (1) or detachable connected to this.

## Revendications

1. Procédé pour la mise en action d'une prothèse auditive (1) avec une fonction de transfert réglable au moyen d'un groupe de paramètres, dans lequel la communication entre un porteur d'une prothèse auditive (HGT) ayant un plan de référence (M) et au moins une personne de référence (BP; BP1, ..., BPi) étant garantie également lors de changements de positions du porteur de la prothèse auditive (HGT) et/ou des personnes de référence (BP; BP1, ..., BPi), le procédé consistant en ce
- que la fonction de transfert de la prothèse auditive (1) est réglée en fonction d'au moins une des directions momentanées des personnes de référence (R; R1, ..., Ri) par un changement du groupe de paramètres de la fonction de transfert, la direction des personnes de référence (R; R1, ..., Ri) enfermant un angle (α; α1; ..., αi) avec le plan de référence (M) du porteur de la prothèse auditive (HGT),
**caractérisé en ce**
- **que** la personne de référence (BP; BP1, ..., BPi) porte une unité d'utilisateur (8), qui émets un signal de référence prédéterminé, et
- **qu'**une unité d'identification de direction (6) pour recevoir le signal de référence prédéterminé est prévue dans la prothèse auditive (1) en vertu des informations directionnelles-sensibles de l'unité d'identification de direction (6) la direction des personnes de référence (R; R1, ..., Ri) désirée est détectée.

2. Procédé selon la revendication 1, **caractérisé en ce**
- **qu**'un signal de stimulation prédéterminé dans la prothèse auditive (1) est généré et émis pour la stimulation d'une unité de transpondeur étant présent dans l'unité d'utilisateur (8), et
- que l'unité de transpondeur génère un signal de réponse comme signal de référence en vertu du signal de stimulation.

3. Procédé selon l'une des revendications 2 ou 3, **caractérisé en ce qu'**un plan médial du porteur de la prothèse auditive (HGT) est utilisé comme plan de référence (M).

4. Prothèse auditive avec une fonction de transfert réglable au moyen d'un groupe de paramètres, la communication entre un porteur d'une prothèse (HGT) ayant un plan de référence (M) et au moins une personne de référence (BP; BP1, ..., BPi) étant garantie également lors de changements de positions du porteur de la prothèse auditive (HGT) et/ou de personne de référence (BP; BP1, ..., BPi), la prothèse auditive (1) comprenant des moyens pour régler la fonction de transfert de la prothèse auditive (1) en fonction d'au moins une des directions momentanées des personnes de référence (R; R1, ..., Ri) par un changement du groupe de paramètres de la fonction de transfert, **caractérisée par** des moyens pour déterminer
- qu'au moins une unité d'identification de direction (6) est prévue pour recevoir un signal de référence prédéterminé, qui est générable par l'unité d'utilisateur (8) portée par la personne de référence (BP; BP1, ..., BPi), et
- que la direction des personnes de référence (R; R1, ..., Ri) désirée est recevable dans la prothèse auditive (1) en vertu des informations directionnelles-sensibles de l'unité d'identification de direction (6).

5. Prothèse auditive selon la revendication 4, **caractérisée en ce**
- moyens pour générer un signal de stimulation prédéterminé sont présents pour la stimulation d'une unité de transpondeur étant présente dans l'unité d'utilisateur (8), et
- qu'un signal de réponse est recevable en vertu du signal de stimulation généré comme signal de référence dans l'unité d'identification de direction (6).

6. Prothèse auditive selon l'une des revendications 4 ou 5, **caractérisée en ce qu'**un plan médial du porteur de la prothèse auditive (HGT) est utilisable comme plan de référence (M).

7. Assemblage avec une unité d'utilisateur (8) et une prothèse auditive (1) avec au moins deux microphones (2,3), une unité de traitement de signaux (4) et un écouteur (5), lesdits microphones (2, 3) et l'écouteur (5) étant reliés avec l'unité de traitement de signaux (4), **caractérisé en ce qu'**une unité d'identification de direction (6) est prévue dans la prothèse auditive (1), qui est reliée fonctionnellement avec l'unité de traitement de signaux (4), et que l'unité d'utilisateur (8) est arrangée dans la région du porteur de la prothèse auditive (HGT), l'unité de l'identification de direction (6) pour déterminer au moins une direction momentanée d'une personne de référence (R; R1, ..., Ri) à l'aide de l'unité d'utilisateur (8).

8. Assemblage selon la revendication 7, **caractérisé en ce que** l'unité d'identification de direction (6) est reliée fonctionnellement avec les microphones (2,3).

9. Assemblage selon la revendication 7, **caractérisé en ce que** l'unité d'identification de direction (6) comprend une unité de réception et que l'unité de l'utilisateur (8) comprend une unité d'émission, **en ce que** les signaux générés dans l'unité d'émission sont recevable dans l'unité de réception.

10. Assemblage selon la revendication 7, **caractérisé en ce que** l'unité d'identification de direction (6) comporte non seulement une unité d'émission mais encore une unité de récepteur.

11. Assemblage selon une des revendications 7 à 10, **caractérisé en ce que** l'unité d'identification de direction (6) est intégrée dans la prothèse auditive (1) ou accouplée de manière détachable avec cette dernière.
